(19) Europäisches Patentamt
European Patent Office
Office européen des brevets

(11) **EP 1 393 470 B1**

(12) **EUROPEAN PATENT SPECIFICATION**

| | |
|---|---|
| (45) Date of publication and mention of the grant of the patent: **07.05.2008 Bulletin 2008/19** | (51) Int Cl.: **H04B 7/185** (2006.01) |
| (21) Application number: **02731018.4** | (86) International application number: **PCT/NO2002/000201** |
| (22) Date of filing: **05.06.2002** | (87) International publication number: **WO 2002/100002 (12.12.2002 Gazette 2002/50)** |

(54) **SATELLITE UPLINK POWER CONTROL**

SATELLITENAUFWÄRTSSTRECKEN-LEISTUNGSREGELUNG

REGLAGE DE PUISSANCE SUR LE TRAJET MONTANT PAR SATELLITE

| | |
|---|---|
| (84) Designated Contracting States: **AT BE CH CY DE DK ES FI FR GB GR IE IT LI LU MC NL PT SE TR** Designated Extension States: **AL LT LV MK RO SI** | (72) Inventor: **ANDENÆS, Jens, Ascentel Limited London SW19 4LA (GB)** |
| (30) Priority: **06.06.2001 NO 20012776** | (74) Representative: **Onn, Thorsten et al Zacco Sweden AB P.O. Box 23101 104 35 Stockholm (SE)** |
| (43) Date of publication of application: **03.03.2004 Bulletin 2004/10** | (56) References cited: **EP-A2- 1 098 456 WO-A1-00/69096 US-A- 4 567 485 US-A- 4 752 967** |
| (73) Proprietor: **Telenor ASA 1331 Fornebu (NO)** | |

## Description

### Field of the invention

The present invention pertains to the field of satellite communication and in particular to scintillation resistant power control techniques for geostationary satellite communication systems in accordance with claim 1 and 8 respectively.

### Background of the Invention

A satellite communication system generally comprises one or more gateway stations, a satellite and a number of user stations. The gateway stations provides an interface to the terrestrial networks and are transmitting and receiving communication carriers at high frequencies to and from the satellite. The satellite is functioning as an amplifier and/or frequency converter for the communication carriers. The user stations may be fixed or mobile. In systems comprising a small number of large gateway stations serving a large population of small user stations (fixed or mobile), satellite cost is normally governed by the characteristics of the forward transmission link, i.e. from the gateways to the user stations. This stems from the requirement to use small antennas on the user stations for cost reasons, which in turn requires more satellite power to achieve a particular transmission quality. This requires high power efficiency in the forward link to achieve good system economy.

The communication carriers are exposed to a number of effects that influence the signal quality or the signal level along the path from a gateway to the user station.

The most important elements are:

- Variations in transmitter gain leading to variations in output power towards the satellite.
- Uplink atmospheric effects such as rain fading and scintillation leading to large signal variations.
- Variations in the satellite transponder signal gain.
- Downlink atmospheric effects such as rain fading and scintillation.

The severity of these effects varies with the climatic conditions at the ground stations and their operating carrier frequency. The atmospheric effects are increased for ground earth stations (gateways or user stations) located such that the satellite is seen at a shallow angle above the horizon since the length of the atmospheric path increases with lower elevation angles.

All these contributions adds to a significant variation in the received signal level on the ground which in turn leads to the need of transmitting signals with an excessive margin to ensure a minimum guaranteed quality level. This margin detracts power from the satellite reducing the system capacity and thus the economics of the system as a whole.

### Prior art

Uplink power control systems has been described in several patents proposing various mechanisms to maintain constant transmit power from the satellite in satellite communications systems irrespective of atmospheric and other disturbances at the uplink station. Most applications are concerned with and designed to compensate relatively slow variations in the transmission path such as rain fading which have time constants of the order of minutes.

US patent 4,567,485 describes a system where one of the stations in a satellite network is stabilized by using a satellite generated beacon signal as level reference in a power control loop. This station is then used as a level reference for the other stations in the network that are slaved to the first station. The system relies on a satellite beacon for its mode of operation, which may not be available at a frequency sufficiently close to the frequency band of the signals to be stabilized. For example, a normal satellite beacon around 3.9 GHz will not be effective in a mobile satellite communication system with its communication carriers around 1.5 GHz.

US patent 4,752,967 describes various methods to compensate variations in the uplink transmission path of a satellite earth station utilizing signals from one or two other stations in the network as beacon stations in the process. In this proposal, rather than stabilizing one particular master station as described US 4,567,485, one or two stations in locations with favorable atmospheric conditions are chosen as references for the power control system. Although the proposed methods will compensate slow varying atmospheric variations quite efficiently, they all have some shortcomings:

the beacon station(s) must exist with substantially less atmospheric variations than the station to be stabilized;

in any of the methods described either satellite variations, local station transmitter variations or both remain uncompensated;

atmospheric uplink variations at the beacon stations are transferred either 100% or SO/50 from each beacon station to the local station;

short term transmitter variations and/or long term variations of the beacon stations are transferred either 100% or 50/50 from each beacon station to the local station. Document EP-A2-1 098 456 discloses a satellite communication system (10) including at least one satellite communication signal repeater (12); at least one ground station (18) for transmitting a feeder link comprised of a plurality of communication signals to the at least one satellite communication signal repeater; and a plurality of user terminals (13) each receiving one of the communication signals over a user link from the at least one satellite communication signal repeater. A method includes steps of measuring a quality of at least one reference signal received by the user terminal, via the satellite; transmitting the measured quality of the reference signal received by the user terminal to the ground station; comparing the measured quality with a predetermined reference; and adjusting a transmit power of the ground station in response to a difference between the predetermined reference and measured quality. The transmit power of the ground station is adjusted so that a flux density of a downlink beam is substantially constant at the user terminal independent of the location of the user terminal in the beam.

Document WO/2000/69096 discloses a system and method for estimating the power of a signal. The signal is compared to and separated into a plurality of ranges. Each range is assigned a particular output value. The output values approximate the square of the input signal based on known characteristics of the input signal. A low pass filter is used to average a plurality of the output values.

The present invention provides a method for up-link power control in a gateway earth station (3) in a satellite communication system comprising a geostationary satellite (2), at least two other geographically dispersed earth gateway stations (4) communicating signal carriers (30) via said satellite (2) and a plurality of user stations (5), the method comprising the method steps recited in the accompanying independent patent claim 1.

Other advantageous features of the method of the invention for up-link power control in a gateway earth station are recited in the accompanying dependent patent claims 2 - 7.

The present invention provides a device for up-link power control in a gateway earth station (3) in a satellite communication system comprising a geostationary satellite (2), at least two other geographically dispersed earth gateway stations (4) communicating signal carriers (30) via said satellite (2) and a plurality of user stations (5), the device comprising the means recited in the accompanying independent patent claim 8.

Other advantageous features of the device of the invention for up-link power control in a gateway earth station are recited in the accompanying dependent patent claims 9 - 14.

**Summary of the invention**

The objective of this invention is to combat not only the slow varying rain fading but also to be able to compensate rapid scintillation effects which occur especially to Satellite Earth Stations that see the satellite at a low elevation angle. These variations are caused by fluctuations in the ionosphere and can cause significant signal fluctuations over a period of a few seconds so schemes relying on heavy low-pass filtering to remove induced errors from external reference carriers (typically 10 seconds or more) will not be able to compensate such variations.

Scintillation also exhibits strong frequency dependency rendering compensation schemes utilizing beacon signals in a different frequency band to the carriers to be stabilized inefficient.

The present invention, in its preferred embodiments, addresses all the shortcomings in the prior art described above. This is accomplished by:

using a larger number of beacon stations, typically 3-5, to estimate local downlink conditions reducing the reliance on the individual beacon station characteristic;

superior method to estimate local down-link variations using adaptive weights to the beacon signals determined by their current individual behavior.

Implementing specific mechanisms for instantaneous detection and subsequent suppression of erroneous or abnormal beacon signals.

Inclusion of a local RF reference in the control loop to enable simultaneous suppression of all unwanted effects in the transmission path without introducing sensitivity to other unwanted detrimental effects.

The variations imposed on the received signal power level along the signal path is given by the equation:

$$\Delta Pr\, x_{US} = \Delta TX_{Gw} + \Delta Up_{Gw} + \Delta Sat + \Delta Dwn_{US}$$

where

$\Delta TX_{Gw}$ is the variations in transmitter gain leading to variations in output power towards the satellite. $\Delta up_{GW}$ is the uplink atmospheric effects such as rain fading and scintillations leading to large signal variations. $\Delta Sat$ is the variations in the satellite transponder signal gain. $\Delta Dwn_{US}$ is the downlink atmospheric effects such as rain fading and scintillation.

The variations of these signal levels can be observed and measured by observing deviations from nominal level values of the different parameters. Parameters associated with equipment will have their nominal level values determined by the nominal settings of the controlling parameters of the equipment as known to a person skilled in the art. Settings may be validated on a day with a clear sky.

The objective of the present invention is to minimize these effects on the signal quality of the communication system and give the communication system the same quality as observed on a day with a clear sky.

A common method used in many systems is the use of Uplink Power Control (UPC) to maintain constant signal power out of the satellite in order to maximize system efficiency. The basic principle is to equip the gateway with a measurement receiver capable of measuring the received level of its own carrier (or a pilot carrier) looped back from the satellite. This information is used to adjust the transmitted level in the opposite sense to eliminate variations in the signal level when it is received on the ground.

In order to minimize satellite power and intersystem interference, it is desirable to maintain the communication carriers at a predefined constant level at the satellite output independent of the variations in the transmission path. This is accomplished by compensating for transmitter, uplink and satellite effects. The signal level information derived from the receiver at the gateway also includes downlink effects and signal detector (receiver) variations. Simple systems use empirical information to apportion a fixed amount of the total measured variations to uplink and satellite effects. In practice the following effects restricts the usefulness of this scheme and makes it unsuitable for many systems:

- The ratio between uplink effects and downlink effects is not constant, but may vary considerably.
- Receiver gain variations can introduce significant errors in the power regulation accuracy.
- Uplink and downlink scintillations are not coherent if the uplink and downlink frequencies are significantly different leading to little or no improvement during scintillation events.

Substantial improvements can be achieved if the satellite has a beacon transmitter operating in the same frequency band as the communication carrier's downlink from the satellite. The beacon signal is transmitted with a stable signal level from the satellite itself and is only subject to downlink effects and gateway receiver errors. By comparing the looped back communication signal level with the beacon signal level, downlink effects is canceled and the control signal comprises only the desired components.

The beacon signal is received at the gateway with the following variations in signal level:

$$\Delta Beac_{Gw} = \Delta Dwn_{Gw} + \Delta Rx_{Gw}$$

where $\Delta Rx_{Gw}$ is the gateway receiver chain variations.

The looped back pilot signal is received at the gateway with the following variations in signal level:

$$\Delta Pil_{Gw} = \Delta TX_{Gw} + \Delta Up_{Gw} + \Delta Sat + \Delta Dwn_{Gw} + \Delta Rx_{Gw}$$

The difference used to control the transmitter gain becomes:

$$\Delta Gain_{Gw} = \Delta Dwn_{Gw} + \Delta Rx_{Gw} - (\Delta TX_{Gw} + \Delta Up_{Gw} + \Delta Sat + \Delta Dwn_{Gw} + \Delta Rx_{Gw})$$

This reduces to:

$$\Delta Gain_{Gw} = -(\Delta TX_{Gw} + \Delta Up_{Gw} + \Delta Sat)$$

The communication carriers at the output of the satellite are:

$$\Delta P_{Sat} = \Delta Gain_{Gw} + \Delta Tx_{Gw} + \Delta Up_{Gw} + \Delta Sat$$

Which becomes:

$$\Delta P_{Sat} = -(\Delta TX_{Gw} + \Delta Up_{Gw} + \Delta Sat) + \Delta Tx_{Gw} + \Delta Up_{Gw} + \Delta Sat = 0$$

This works well if the frequency difference between the beacon transmitter and the compensated communication carriers are not too large so that the atmospheric disturbances of the beacon signal are identical to the disturbances of the communication carriers.

**Disclosure of the Invention**

Some systems do not have a satellite beacon transmitter with frequency sufficiently close to that of the communication carriers to be of any use for scintillation compensation. As an example, geostationary mobile satellite systems typically use L-band signals (1.5/1.6 GHz). Between the satellite and the mobile terminals while the feeder link between the satellites and the gateways are at C-band (6/4 GHz). The satellite beacon transmitter is around 4 GHz, which is not sufficiently close to the downlink L-band signals to be used directly for scintillation cancellation as shown above.
Therefore there is a need for another solution to this problem. The present invention takes advantage of the fact that in networks comprising several gateways with each gateway transmitting carriers to the satellite, simultaneous reception of these carriers by any of the gateways can be exploited to derive the local downlink atmospheric conditions at the gateway. This information can then in turn be used in an uplink power control system to make it immune to the downlink effects prevailing at the gateway similar to the use of a beacon transmitter as in the case above.

**Brief description of the Drawings**

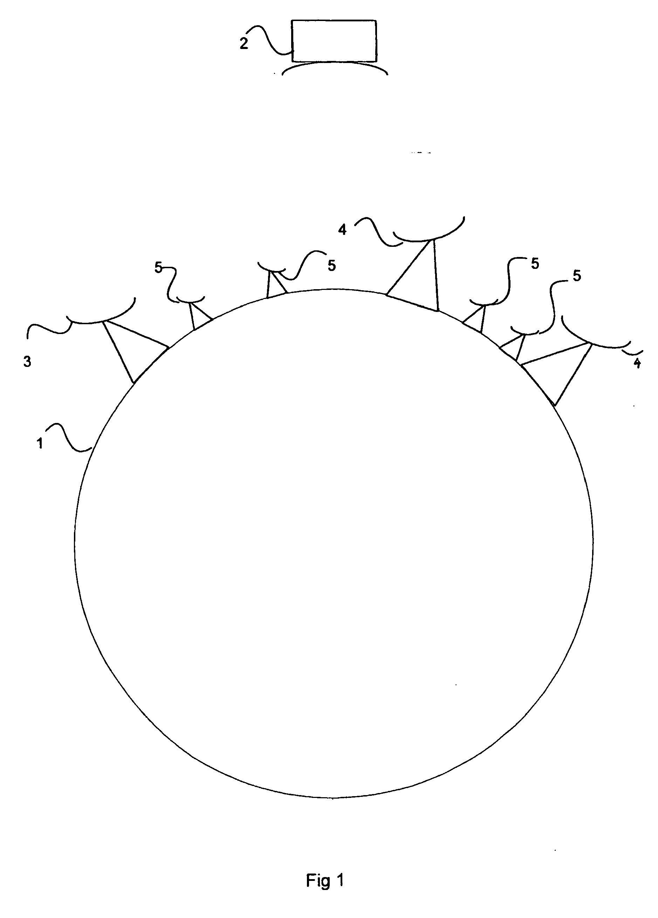

Fig. 1 shows a typical scenario comprising a geostationary satellite 2, a gateway 3 employing the invention , other gateways 4 operating on the same satellite 2, and a number of user stations 5 communicating with the gateway 3. The user stations 5 may be mobile or in a fixed location. The gateways 3 and 4 communicate with the user stations 5 via outbound signals through the satellite 2 and the user stations 5 communicate with the gateways 3 and 4 via inbound signals through the satellite 2.

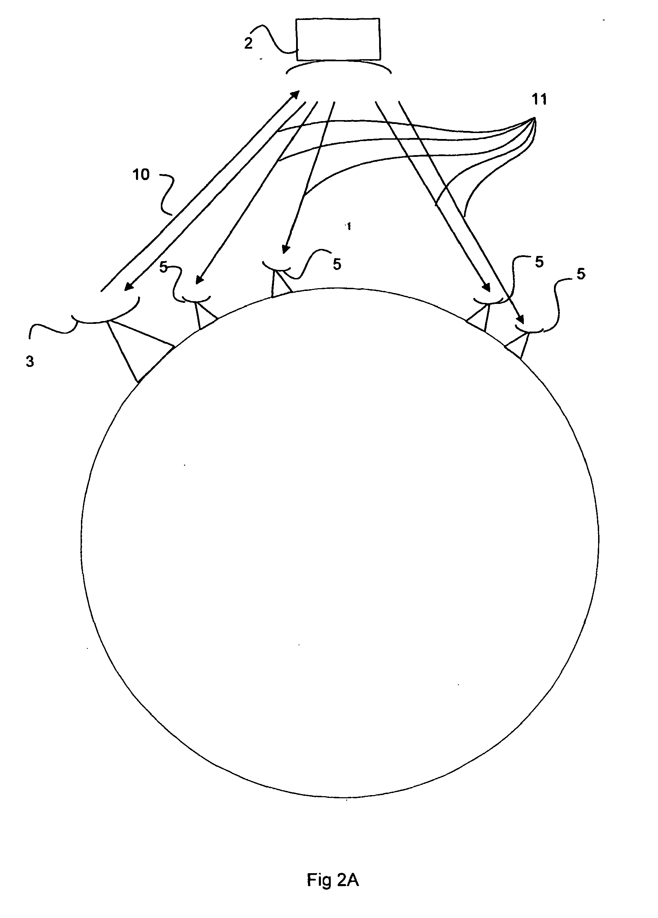

Fig. 2A illustrates the outbound signals 10 transmitted by one of the gateways 3 to the satellite, which in turn retransmits the signals 11 down link to the user stations 5. The gateway also normally monitors its outbound signals 10 (signal 11).

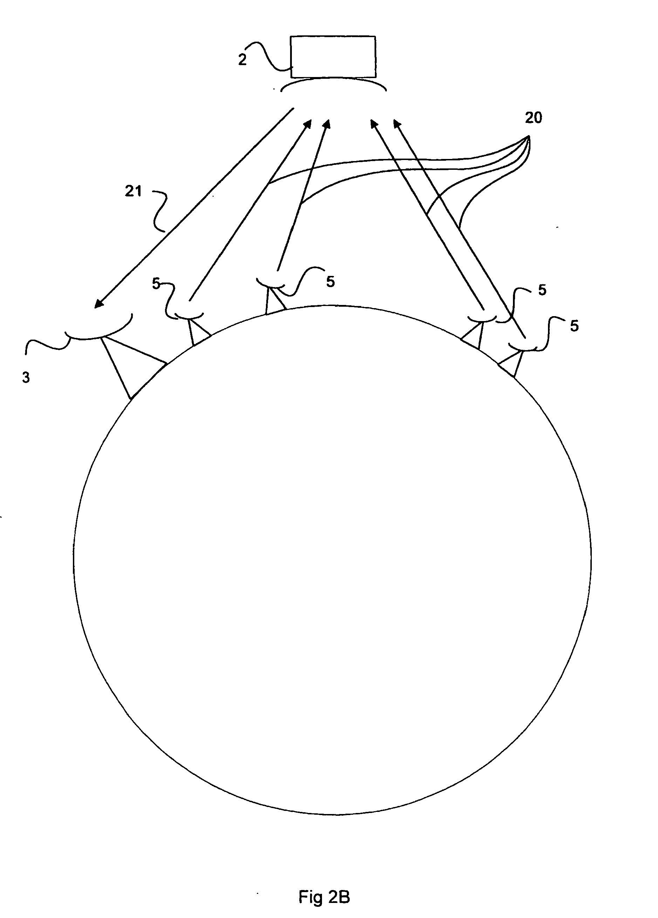

Fig. 2B illustrates the inbound signals 20 transmitted by the user stations to the satellite, which in turn retransmits the signals 21 down link to the gateway 3.

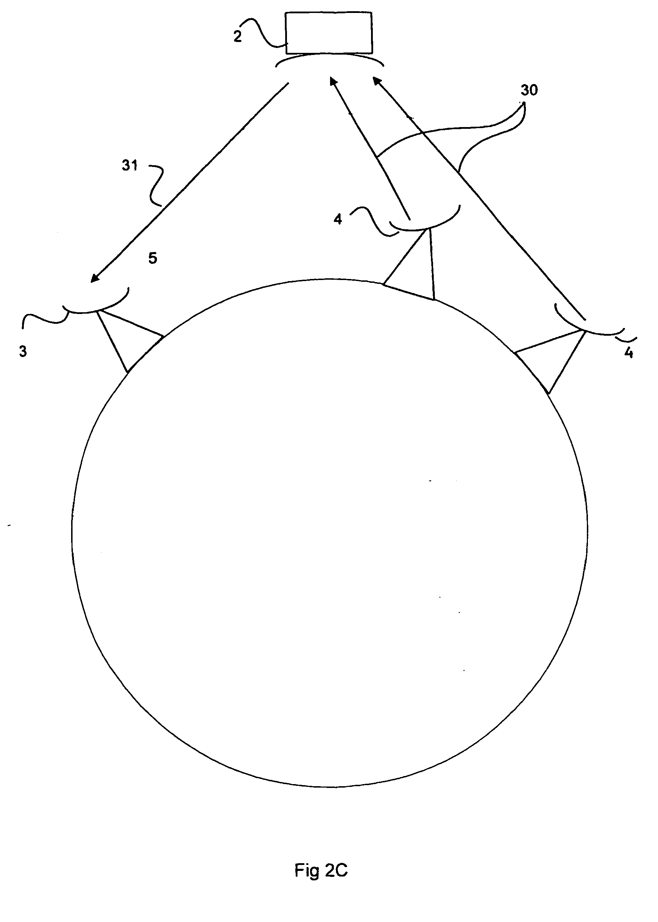

Fig. 2C illustrates the gateway 3 monitoring via signal 31 the outbound signals 30 transmitted by other gateways 4 operating over the satellite.

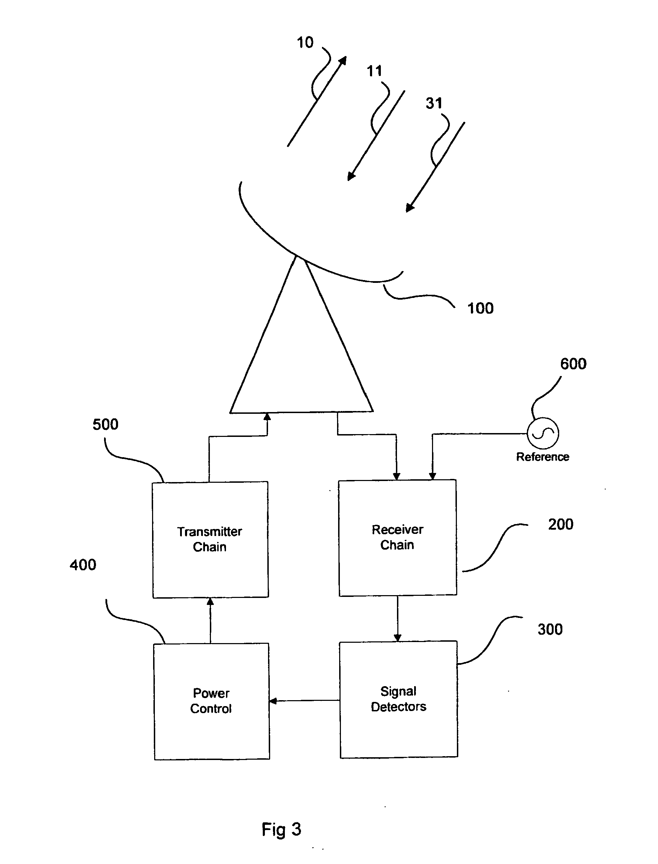

Fig. 3 illustrates the main components of the gateway station 3 employing power control 400 to its transmitted carriers 10. It comprises an antenna 100 receiving and emitting signals 10,11,31 to the satellite 2, a receiver chain 200, a transmitter chain 500, signal detectors 300, a power control function 400 and an optional reference signal generator 600.

Fig. 4 illustrates a first exemplary embodiment of the invention. The TDM signals 30 are retransmitted by the satellite 2 and are monitored as the signals 31 by the gateway 3 that employs the invention. The pilot detector 310 detects the received pilot signal 11s power level and the scanner detector 320 finds the selected TDM signals 31 s power levels the invention uses to determine the scintillation and to determine the necessary amount of adjustment of the power control 400 in the transmitting chain 500.

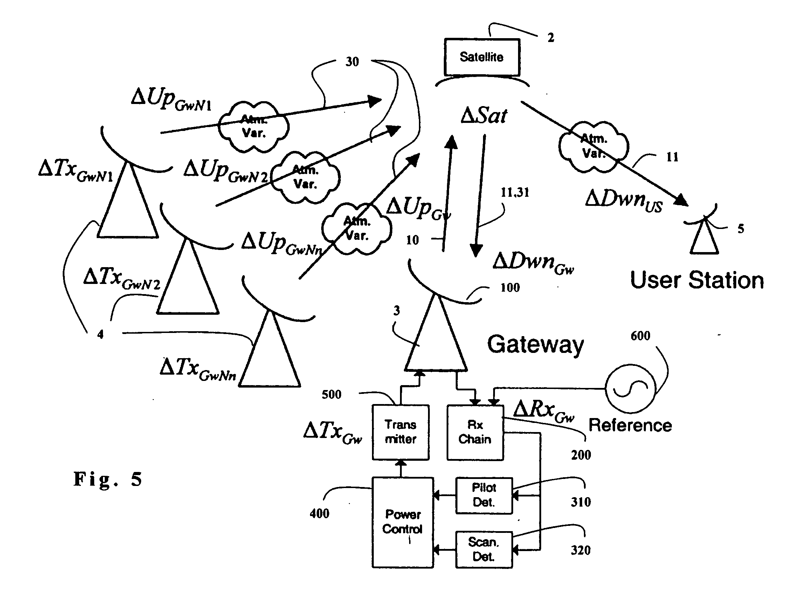

Fig. 5 illustrates a second embodiment of the invention, in addition to the functions depicted in Fig. 4, which also includes a reference signal 600 in the receiving chain 200 to characterize gain variations in the receive system allowing elemination of variations in the satellite 2 gain in the final regulation loop.

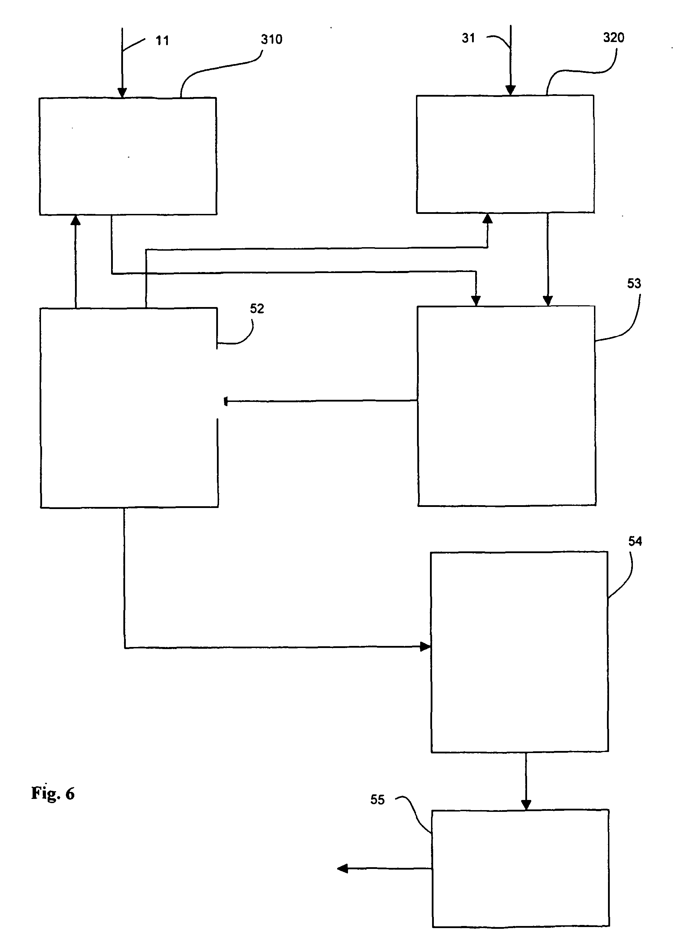

Fig. 6 illustrates a best mode implementation of the invention. The receiving means 310,320 containing the necessary electronics for signal conditioning and tuning of the signal can be adjusted by control sequences from the micro controller 52 to receive the different TDM signals 31 or pilot signal 11 or the reference signal 600. The Analog to Digital Converter 53 converts the received signals 11,31 to digital form for processing by control sequences in the micro controller 52 performing the steps of the invention. The Digital to Analog Converter 54 converts the digital UPC control signal to analog form suitable for connecting to a standard AGC input control signal of the power amplifier via the output means 55 containing the necessary electronics for interfacing the signal to the AGC input of the power control 400 of the transmitter chain 500.

Fig. 7 illustrates the typical components of power control system.

Fig. 8 illustrates the basic steps in the algorithm for an adaptive downlink estimator according to the invention.

Fig. 9 illustrates the basic steps in the algorithm for an enhanced adaptive downlink estimator.

**Preferred embodiment of the Invention**

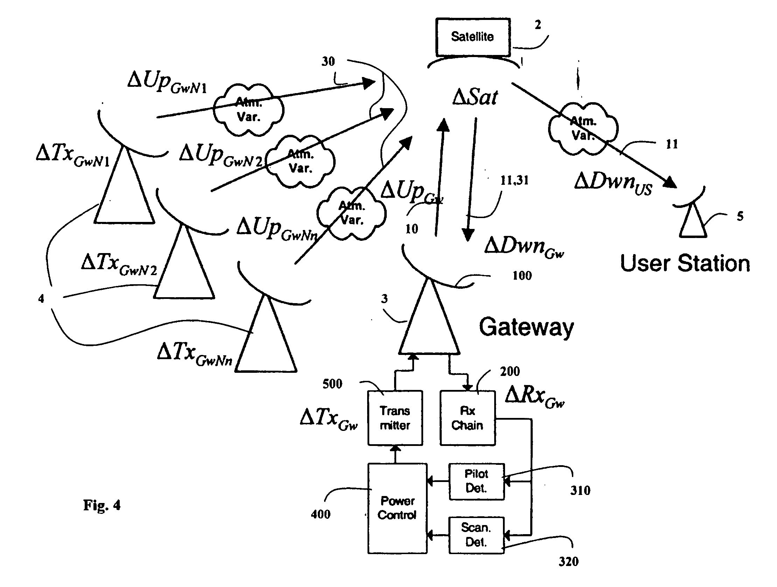

In a preferred embodiment of the invention (fig. 4) the system comprises a number of gateways (N1 to Nn) 4 each transmitting a communication carrier or a signaling carrier that is always on (e.g. a Time Division Multiplex carrier, TDM) 30.

The TDM 31 from Gateway N 1 4 is received at the gateway 3 at the input of the receiver chain 200 employing the invention with the following variations in signal level:

$$\Delta TDM_{GwN1} = \Delta TX_{GwN1} + \Delta Up_{GwN1} + \Delta Sat + \Delta Dwn_{Gw} + \Delta Rx_{Gw}$$

Similarly, the TDM from gateway Nn 4 is received with the following variations in signal level:

$$\Delta TDM_{GwNn} = \Delta TX_{GwNn} + \Delta Up_{GwNn} + \Delta Sat + \Delta Dwn_{Gw} + \Delta Rx_{Gw}$$

The gateways 4 are located remote to each other such that the atmospheric conditions can be assumed to be independent of each other. Likewise, the transmitter variations are also independent. By averaging over a number signal levels of carriers 31 and applying suitable signal processing as known to a person skilled in the art, the independent terms can be significantly reduced to an insignificant noise term. The resultant mean value after this process can be expressed as:

$$\Delta TDM_{Mean} = N + \Delta Sat + \Delta Dwn_{Gw} + \Delta Rx_{Gw}$$

where N denotes the residual noise after the averaging process. The measurement of each signal level of carrier 31 can be effected by either a set of receivers, one for each TDM 31 signal, a scanning receiver capable of measuring each signal level of carrier 31 in rapid succession or a combination of the two. The scanning receiver and the averaging process must be rapid to accurately track the atmospheric variations during scintillation events, the actual rate depending on the carrier frequencies involved.

The looped back pilot signal 11 is received at the gateway 3 with the following variations in signal level:

$$\Delta Pil_{Gw} = \Delta TX_{Gw} + \Delta Up_{Gw} + \Delta Sat + \Delta Dwn_{Gw} + \Delta Rx_{Gw}$$

The difference, used to control the transmitter 500 gain, becomes:

$$\Delta Gain_{Gw} = N + \Delta Sat + \Delta Dwn_{Gw} + \Delta Rx_{Gw} - (\Delta TX_{Gw} + \Delta Up_{Gw} + \Delta Sat + \Delta Dwn_{Gw} + \Delta Rx_{Gw})$$

This reduces to:

$$\Delta Gain_{Gw} = N - (\Delta TX_{Gw} + \Delta Up_{Gw})$$

The signal level variations of the communication carriers at the output of the satellite 2 are:

$$\Delta P_{Sat} = \Delta Gain_{Gw} + \Delta TX_{Gw} + \Delta Up_{Gw} + \Delta Sat$$

Which becomes:

$$\Delta P_{Sat} = N - (\Delta TX_{Gw} + \Delta Up_{Gw}) + \Delta TX_{Gw} + \Delta Up_{Gw} + \Delta Sat$$

Which reduces to:

$$\Delta P_{Sat} = N - \Delta Sat$$

The atmospheric variations and the gateway 3 signal level variations have been eliminated and the residual error is only the satellite signal level variations and a small noise term.

An other embodiment of the invention illustrated in figure 6, a reference generator 600 is added to the receiving subsystem 200 of the gateway 3 to enable real time measurement of gain changes in the receiver chain 200.

As in the first exemplary embodiment of the invention the averaging process and measurements of the signal levels of the TDM signals 31 from the different gateways 4 will produce an average variation level signal:

$$\Delta TDM_{Mean} = N + \Delta Sat + \Delta Dwn_{Gw} + \Delta Rx_{Gw}$$

The average value is subjected to a high-pass filter with a cut-off that removes the slow satellite 2 variations from the estimate, but to pass the rapid scintillations. This also removes the slow gain variations of the gateway receiver system 200 resulting in the following variations of the level signal:

$$\Delta TDM^{'}_{Mean} = N + \Delta Dwn_{Gw}$$

The high-pass filter is applied on each received signal level of the TDM 31 signal before averaging the signal levels.

The filter can be implemented in the form:

$$TMP_t = K_1 * P + (1 - K_1) * TMP_{t-1}$$

$$P'_t = P - TM\ P_t$$

where $TMP_t$ is a temporary variable at a current time t, $K_1$ is a coefficient set to be between 0 and 1, P is the current measured power of TDM 31 which the scanning detector 320 is tuned to at time t, $TMP_{t-1}$ is the previous sample value of the temporary variable TMP and $P'_t$ is the desired high-pass filter value of TDM 31 signal power level.

The measured variation of the level of the reference signal injected at the input of the receiving system 200 is:

$$\Delta Re_{Gw} = \Delta Rx_{Gw}$$

This value is added to the TDM estimate to give the following value:

$$\Delta TDM`_{Mean} = N + \Delta Dwn_{Gw} + \Delta Rx_{Gw}$$

The looped back pilot signal 11 is received at the gateway 3 with the following variations in signal level:

$$\Delta Pil_{Gw} = \Delta TX_{Gw} + \Delta Up_{Gw} + \Delta Sat + \Delta Dwn_{Gw} + \Delta Rx_{Gw}$$

The difference, used to control the transmitter 500 gain, becomes:

$$\Delta Gain_{Gw} = N + \Delta Dwn_{Gw} + \Delta Rx_{Gw} - (\Delta TX_{Gw} + \Delta Up_{Gw} + \Delta Sat + \Delta Dwn_{Gw} + \Delta Rx_{Gw})$$

This reduces to:

$$\Delta Gain_{Gw} = N - (\Delta TX_{Gw} + \Delta Sat + \Delta Up_{Gw})$$

The level of the variations of the communication carrier signals at the output of the satellite 2 is:

$$\Delta P_{Sat} = \Delta Gain_{Gw} + \Delta TX_{Gw} + \Delta Up_{Gw} + \Delta Sat$$

Which becomes:

$$\Delta P_{Sat} = N - (\Delta TX_{Gw} + \Delta Sat + \Delta Up_{Gw}) + \Delta TX_{Gw} + \Delta Up_{Gw} + \Delta Sat$$

Which reduces to:

$$\Delta P_{Sat} = N$$

Which is only a small noise term.

In the disclosure of the two exemplary embodiments of the invention the noise term is small. But in order to reduce the noise term further the following steps can be applied to the multi TDM estimate calculations:

1. If the power level of the TDM 31 from a gateway 4 falls below a predefined threshold (Thr1), its measured value of power level is replaced by a constant value in the averaging process to limit the effect of a faulty gateway 4 on the performance.

2. If the instantaneous value of any particular power level of a TDM 31 signal deviates from the instantaneous average value of all the power levels of the TDMs (31) by more than a second predefined value (Thr2), it will be replaced by a constant value in the averaging process. This reduces substantially the effects that a local uplink scintillation event at a gateway 4 can have on the power regulation.

3. If the absolute value of the level difference between the current average value of all TDMs (31) and the average one processing sample earlier is below a third threshold (Thr3), the average is filtered by a low-pass filter with a suitable bandwidth. If Thr3 is exceeded, i.e. a scintillation event is detected at the gateway 3, the bandwidth of the filter is increased to enable a fast tracking mode to accurately track and suppress the scintillation as long as the condition is satisfied.

The low-pass filter in step 3 above can be of the form:

$$D'_t = K_2 \, {}^*D + (1 - K_2)^* \, D'_{t-1}$$

where $D'_t$ is the filter output at the current sample time t, $K_2$ is a parameter that can be set to one of two different values between 0 and 1 depending on the absolute rate of change of the third difference being above or below the predefined threshold Thr3, and thereby enable fast tracking mode, D is the prevailing third difference and $D'_{t-1}$ is the previous sample filter output.

There are several possible implementation of the invention in an existing gateway 3 earth station. The invention requires the gateway transmitter to be capable of electronic gain control. If this is not already part of the existing installation, such functionality can be achieved through the inclusion of a standard off the shelf UPC controller as known to a person skilled in the art. The UPC controller, which is usually controlled by the pilot signal 11 only, is controlled by the output signal $\Delta Gain_{Gw}$. The power control can be selected to be in a closed loop or open loop configuration, usually by a command setting in the UPC controller.

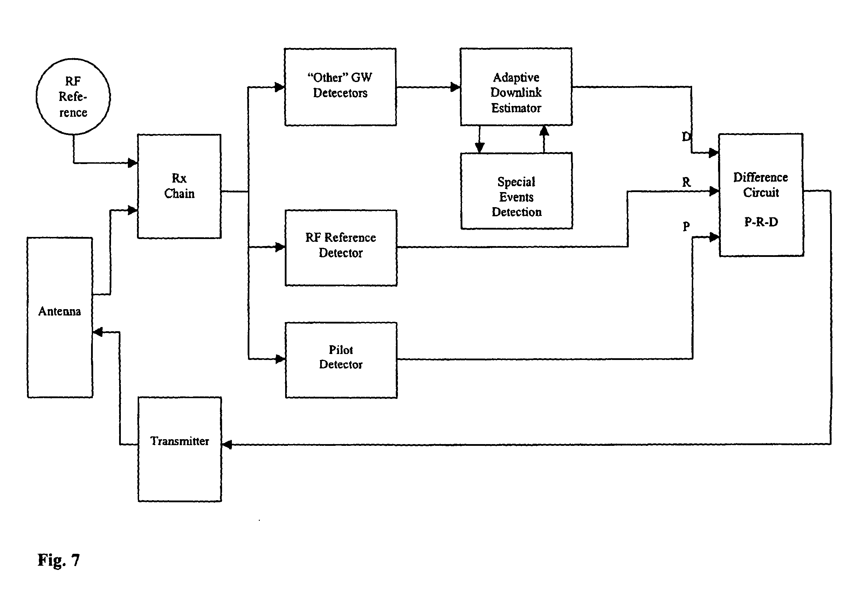

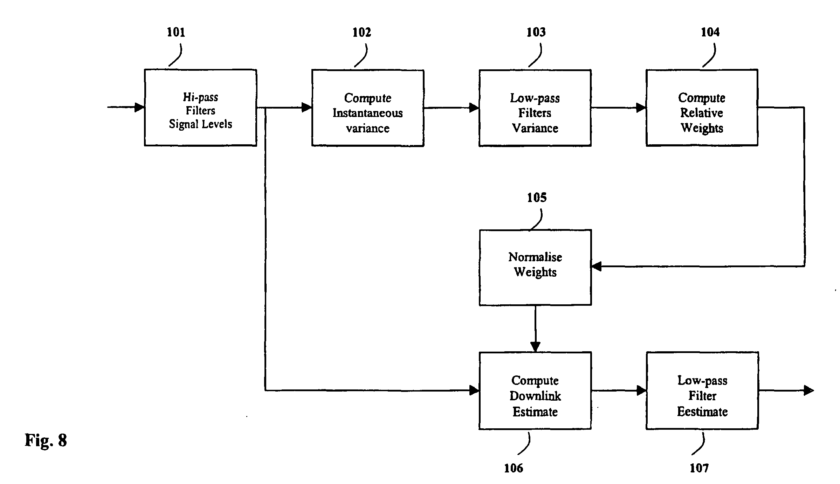

Yet an other embodiment is shown in fig.7, the overall control system is as before but the downlink estimation is made adaptive. The steps of an algorithm (fig. 8) of a basic estimator of downlink variations using adaptive weights to the TDM 31 signals determined by their current individual behavior are shown as functional blocks:

Block 101: High-pass filter signal levels.

The inputs are the levels of the TDM 31 signals as detected by the scanning detector 320.

Each detected TDM 31 signal level is passed through an individual high-pass filter. It takes the form of subtracting a low-pass filtered version of the signal from the signal itself. The output represents the instantaneous change in level with respect to a longer-term mean value.

Block 102: Compute instantaneous variance.

This block takes as input the signals output from block 101.

It computes the difference between the change in each of the signals and the mean of the changes of the other signals. It then computes the absolute value of said difference.

Block 103: Low-pass filter variance.

This block takes as input the signals output from block 102.

It produces a low-pass filtered version of the variance. The output of the filters are estimates of the current variance of each carrier with respect to the average of all the TDM 31 carriers.

Block 104: Compute relative weights.

This block takes as input the signals output from block 103.

It computes a weight for each signal such that when multiplied by the weight, they each contribute the same variance. I.e. the relative weights are the inverse of the variance.

Block 105: Normalize weights.

This block takes as input the signals output from block 104.

It normalizes the weights such that the sum of the weights is 1 while maintaining the relative ratio. I.e. the normalized weight is equal to the relative weight divided by the sum of the relative weights.

Block 106: Compute downlink estimate

This block takes as input the signals output from block 101 and block 105.

It computes a downlink estimate by first multiplying the level changes output from block 101 with the associated normalized weights output from block 105. The resulting products are then summed to form the instantaneous downlink estimate.

Block 107: Low-pass filter Estimate

This block takes as input the signals output from block 106.

It produces a low-pass filtered version of the downlink estimate. The time constant is optimized (a few seconds or less) to the characteristics of the scintillation.

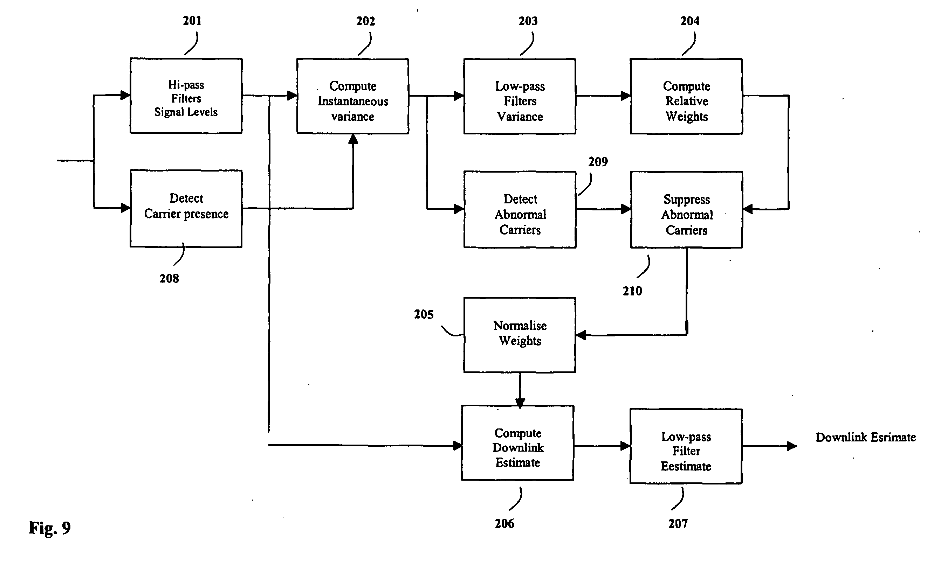

The best mode embodiment of the invention is shown in fig. 9. This is an enhanced version of the estimator shown in fig. 8 by adding a special event detector. The steps of the enhanced estimator are shown as blocks in fig. 9. The steps are the same as in fig. 8 except that the block 208, 209 and 210 has been augmented to the steps. These blocks detect anomalies in the TDM 31 signals and take immediate action to prevent errors to be induced in the control loop.

Block 201: High-pass filter signal levels.

The inputs are the level of the TDM 31 signals from the scanning detector 320.

Each detected TDM 31 signal level is passed through an individual high-pass filter. It takes the form of subtracting a low-pass filtered version of the signal from the signal itself. The output represents the instantaneous change in level with respect to a longer-term mean value.

Block 208: Detect carrier presence.

The inputs are the signals from the scanning detector 320.

Each detected TDM31 signal level is compared to a pre-set threshold. If the level is above the threshold a qualifier associated with the signal is set to one, otherwise it is set to zero.

Block 202: Compute instantaneous variance.

This block takes as input the signals output from block 201 and the qualifiers from block 208. Only signals with qualifiers equal to one are processed.

It computes the difference between the change in each of the qualified signals and the mean of the changes of all the TDM 31 qualified signals. It then computes the absolute value of said difference. The said absolute value is then raised to a power of n where n typically is in the range 2 to 4 dependent on how many TDMs are available for the estimation process.

Block 203: Low-pass filter variance.

This block takes as input the signals output from block 202.

It produces a low-pass filtered version of the variance. The outputs of the filters are estimates of the current variance of each carrier with respect to the average of the TDM 31 carriers.

Block 204: Compute relative weights.

This block takes as input the signals output from block 203.

It computes a weight for each TDM 31 signal such that when multiplied by the weight, they each contribute the same variance. I.e. the relative computed weights are the inverse of the variancece computed in block 203.

Block 209: Detect abnormal carriers.

This block takes as input the signals output from block 202.

The instantaneous variance of each TDM 31 signal is compared to a pre-set threshold. If the variance of level is less than the threshold a second qualifier associated with the signal is set to one, if it is greater it is set to zero.

Block 210: Suppress abnormal carriers.

This block takes as input the signals output from block 204 and the second qualifiers from block 209. Signals with second qualifiers equal to one are passed to the output; signals with second qualifiers equal to zero are blocked from further processing.

Block 205: Normalize weights.

This block takes as input the signals output from block 210.

It normalizes the weights such that the sum of the weights is 1 while maintaining the relative ratio. I.e. the normalized weights are equal to the relative weights divided by the sum of the relative weights.

Block 206: Compute downlink estimate.

This block takes as input the signals output from block 201 and block 205.

It computes a downlink estimate by first multiplying the level changes output from block 201 with the associated normalized weights output from block 205. The resulting products are then summed to form the instantaneous downlink estimate.

Block 207: Low-pass filter Estimate.

This block takes as input the signals output from block 206.

It produces a low-pass filtered version of the downlink estimate. The time constant is optimized (a few seconds or less) to the characteristics of the scintillation.

The best mode embodiment of the present invention is to replace, in a conventional Uplink Power Control system, the usual use and configuration of the pilot signal 11 detector with a configuration including a "Multi channel Scintillation and Fading Processing Receiver". This box will together with the traditional UPC equipment perform the preferred steps of the embodiment as described in the exemplary embodiments above.

The Multi channel Scintillation and Fading Processing Receiver as shown in fig. 6 comprises carrier signal inputs 11, 31 with their respective receivers 310,320. The Analog to Digital Converter circuit 53 converts the signal levels of the carrier signals 31 and the level of the pilot signal 11 to binary form suitable for processing by the micro controller 52. The micro program running in the micro controller 52 performs the necessary steps of the invention as described above in the exemplary embodiments of the invention. The output of the micro program is fed through the Digital to Analog converter 54 to the AGC input of the UPC unit via the output means 55. The micro program reads the pilot receiver 310 measuring the signal level of the pilot signal 11 and the RF reference 600 signal and the scanning receiver 320 measuring TDM 31 signal levels. The best way to implement the small multitasking real time program system in the micro controller 52 is to let the program measure the pilot signal 11 every 100ms to obtain continuously regulation of the power. Whilst the scanning rate of the TDMs 31 an be relaxed to be completed once per second or less.

The gateways 4 chosen to be part of the scheme (preferably at least 5) should be selected on basis of a statistical analysis based on received signal quality from a selection of possible stations 4 over a period of minimum 1 month. The stations 4 with the best signal quality should be used in the scheme to achieve the best resultant stability. The RF reference signal 600 is injected in the RF signal path by a directive RF coupler that gets its signal from a standard signal generator.

One of the main benefits of the present invention is the symmetry in the preferred embodiment when the invention is applied on several gateways in the same communication system. If we also implement this invention in a gateway 4, regarding it as gateway 3 as described in the preferred embodiment, and uses the gateway 3 as gateway 4 both gateway 3 and 4 will regulate their outbound signal power levels and thereby increase the total signal quality by regulating the signals that are used to regulate the uplink power in the communication system.

**Claims**

1. A method for up-link power control in a gateway earth station (3) in a satellite communication system comprising a geostationary satellite (2), at least two other geographically dispersed earth gateway stations (4) communicating signal carriers (30) via said satellite (2) and a plurality of user stations (5), comprising the steps of :

   transmitting a first outbound signal (10) to said satellite from a first gateway (3); receiving said first outbound signal (10) looped back (11) from said satellite (2) in first said gateway (3) determining the said first outbound signal (10) power level;
   **characterized in**:

      receiving signals (31) from at least a second gateway station (4) and at least a third gateway station (4) in the same said communication system from said satellite (2) in the first said gateway station (3), and performing the up-link power control in said gateway earth station (3) by
      determining the signal power level of received signals (31) from said second gateway (4) and from said third gateway (4);
      replacing the signal power level of at least one of said received signals (31) from said second gateway (4) or from said third gateway (4) in said first gateway (3) with a predefined nominal power value level if the power level of at least one of said received signals (31) is below a first predefined threshold value;
      computing a mean value of the signal power level of the received signals (31) from said second gateway station (4) and said third gateway station (4) in said first gateway station (3);
      computing a first difference between said first signal (11) power level of said first outbound signal (10) from first said gateway (3) and a nominal signal power level of an outbound signal looped back from said satellite (2) to first said gateway (3);
      computing a second difference between said mean signal power level of said second signal (31) from said second gateway (4) and said third signal (31) from said third gateway (4) and a nominal mean power level of a signal from said second gateway (4) and a signal from said third gateway (4);
      computing a first error signal formed by the difference of said first difference and said second difference; and adjusting the power level of said first gateway stations (3) outbound signals by an amount based on said first error signal within the permissible range of said power level;
      or
      performing the up-link power control in said gateway earth station (3) by
      filtering respective ones of said received signals (31) in respective individual high pass filters of the form of subtracting a low pass filtered version of a filter input signal from the filter input signal itself, to produce respective instantaneous level change signals;
      computing respective absolute level change signals for said received signals (31) by subtracting the respective instantaneous level change signals from a mean of the changes of all the received signals (31) to produce respective change differences, and computing respective absolute values of produced respective change differences to produce respective absolute value level change signals;
      computing respective variances for the received signals (31) by raising the respective absolute value level change signals to a power in a range of 2 to 5 and filtering the respective results in a lowpass filter;
      computing respective weights for the received signals (31) by taking the inverse of the respective variances such that when multiplied by the respective weights, the received signals (31) contribute the same variance;
      computing respective normalized weights for the received signals (31) such that the sum of said normalized weights equal 1;
      computing a downlink estimate by first multiplying said respective instantaneous level change signals for the received signals (31) with their respective normalized weights and then summing all products of the multiplications to form an instantaneous downlink estimate;
      computing a second error signal formed as a difference between said instantaneous downlink estimate and the received first outbound signal (10) looped back (11) and a RF reference signal; and
      adjusting the power level of said first gateway stations (3) outbound signals by an amount based on said second error signal within the permissible range of said power level.

2. Method according to claim 1 **characterized in** the step of :

filtering all said signal levels of the received signals (31) from said second gateway station (4) and from said third gateway station (4) in said first gateway (3) that are above said first predefined threshold value with a high-pass filter of the form:

$$TMP_t = K_1 *P + (1-K_1) * TMP_{t-1}$$

$$P'_t = P-TM P_t$$

where TMP, is a temporary variable at a current time t, $K_1$ is a coefficient set to be between 0 and 1, P is the current measured power of signal (11,31) the gateway (3) is receiving at time t, $TMP_{t-1}$ is the previous sample value of the temporary variable TMP and $P'_t$ is the desired high-pass filter value of said signal power level (31).

3. Method according to claim 2 further **characterized in** the step of :

replacing the outputs of the said high-pass filter with zero if said level of the received signals (31) is below said first threshold value.

4. Method according to claim 1 **characterized in** the step of :

replacing a current signal power level of the received signals (31) from said second gateway station (4) and from said third gateway station (4) with a constant nominal value in the averaging process if the signal power level of the received signals (31) deviates from a current average signal power level of said received signals (31) from said second gateway station (4) and from said third gateway station (4) with more than a second predefined threshold value.

5. Method according to claim 1 **characterized in** the step of : low-pass filtering the mean value of the signal level of the received signals (31) from said second gateway (4) and from said third gateway (4) with a low-pass filter of the form:

$$D'_t=K_2*D+(1-K_2)*D'_{t-1}$$

if a third difference between said current mean value and the said mean value of one processing step earlier is below a third threshold value; and where $D'_t$ is the filter output at the current sample time t; $K_2$ is a parameter set to a first value of two different values between 0 and 1 depending on the absolute rate of change of the third difference being above or below the said predefined third threshold value; D is the prevailing said third difference and $D'_t$. is the mean value of one processing step earlier.

6. Method according to claim 5 further **characterized in** the step of :

replacing said parameter K2 with a second value between 0 and 1 if said mean value exceeds said third threshold value to enable tracking of scintillations.

7. Method according to claim 1, 5 or 6 **characterized in** the steps of :

computing a fourth difference between an injected reference signal level and said signals nominal value of the signal level; and
computing an error signal formed by the difference between said low-pass filtered signals said third difference and said fourth difference; and
adjusting the power level of said first gateway stations (3) outbound signals by an amount based on said error signal within the permissible range of said power level.

8. A device for up-link power control in a gateway earth station (3) in a satellite communication system comprising a geostationary satellite (2), a least two other geographically dispersed earth gateway stations (4) communicating signal carriers (30) via said satellite (2) and a plurality of user stations (5), comprising:

means for transmitting a first outbound signal (10) to said satellite from a first gateway (3); means for receiving said first outbound signal (11) looped back from said satellite (2) in first said gateway (3) determining the said first outbound signal (10) power level;

**characterized in**:

a first arrangement adapted to performing the up-link power control in said gateway earth station (3), said first arrangement comprising

means for receiving signals (31) from at least a second gateway station (4) and at least a third gateway station (4) in the same said communication system from said satellite (2) in the first said gateway station (3), and for determining the signal power level of received signals (31) from said second gateway (4) and from said third gateway (4);

means for replacing the signal power level of at least one of said received signal (31) from said second gateway (4) or from said third gateway (4) in said first gateway (3) with a predefined nominal power value level if the power level of the at least one of said received signals (31) is below a first predefined threshold value;

means for computing a mean value of the signal power level of the received signals (31) from said second gateway station (4) and said third gateway station (4) in said first gateway station (3);

means for computing a first difference between said first signal power level of said first outbound signal (10) from first said gateway (3) and a nominal signal power level of an outbound signal (10) looped back (11) from said satellite (2) to first said gateway (3);

means for computing a second difference between said mean signal power level of the received signals (31) from said second gateway station (4) and said said third gateway station (4) and a nominal mean power level of a signal from said second gateway (4) and a signal from said third gateway (4);

means for computing a first error signal formed by the difference of said first difference and said second difference; and

means for adjusting the power level of said first gateway stations (3) outbound signals by an amount based on said first error signal within the permissible range of said power level.

or

a second arrangement adapted to performing the up-link power control in said gateway earth station (3), said second arrangement comprising

means for filtering respective ones of said received signal (31) in respective individual high pass filters of the form of subtracting a low pass filtered version of a filter input signal from the filter input signal itself, to produce respective instantaneous level change signals;

means for computing respective level change signals for said received signals (31) by subtracting the respective instantaneous level change signals from a mean of the changes of all the received signals (31) to produce respective change differences, and for computing respective absolute values of produced respective change differences to produce respective absolute value level change signals;

means for computing respective variances for said received signals (31) by raising the respective absolute value level change signals to a power in a range of 2 to 5 and filtering the respective results in a lowpass filter;

means for computing respective weights for said received signals (31) by taking the inverses of the respective variances such that when multiplied by the respective weights, each of the received signals (31) contribute the same variance;

means for computing respective normalized weights for said received signals (31) such that the sum of said normalized weights equal 1;

means for computing a downlink estimate by first multiplying said respective instantaneous level change signals for said received signals (31) with their respective normalized weights and then summing all products of the multiplications to form an instantaneous downlink estimate;

means for computing a second error signal formed as a difference between said instantaneous downlink estimate and the received first outbound signal (10) looped back (11) and a RF reference signal; and

means for adjusting the power level of said first gateway stations (3) outbound signals by an amount based on said second error signal within the permissible range of said power level.

9. Device according to claim 8, **characterized in**:

means for filtering all said received signal levels of the received signals (31) from said second gateway station (4) and from said third gateway station (4) in said first gateway (3) that are above said first predefined threshold value with a high-pass filter of the form:

$$TMP_t = K_1 *P + (1-K_1) * TMP_{t-1}$$

$$P'_t = P-TM\ P_t$$

where TMP, is a temporary variable at a current time t, $K_1$ is a coefficient set to be between 0 and 1, P is the current measured power of signal (11,31) the gateway (3) is receiving at time t, $TMP_{t-1}$ is the previous sample value of the temporary variable TMP and $P'_t$ is the desired high-pass filter value of said signal power level (31).

10. Device according to claim 9, further **characterized in**:

means for replacing the outputs of the said high-pass filter with zero if said level of the received signals (31) is below said first threshold value.

11. Device according to claim 8, **characterized in**:

means for replacing a current received signal power level of the received signals (31) from said second gateway station (4) and from said third gateway station (4) with a constant nominal value in the averaging process if the signal power level of the received signals (31) deviates from a current average signal power level of said received signals (31) from said second gateway station (4) and from said third gateway station (4) with more than a second predefined threshold value.

12. Device according to claim 8, **characterized in**:

means for low-pass filtering the mean value of the signal level of said second signal (31) from said second gateway (4) and the signal level of said third signal (31) from the said third gateway (4) with a low-pass filter of the form:

$$D'_t = K_2*D+(1-K_2)*D'_{t-1}$$

if a third difference between said current mean value and the said mean value of one processing step earlier is below a third threshold value; and where $D'_t$ is the filter output at the current sample time t; $K_2$ is a parameter set to a first value of two different values between 0 and 1 depending on the absolute rate of change of the third difference being above or below the said predefined third threshold value; D is the prevailing said third difference and $D'_t$ is the mean value of one processing step earlier.

13. Device according to claim 11, further **characterized in**:

means for replacing said parameter K2 with a second value between 0 and 1 if said mean value exceeds said third threshold value to enable tracking of scintillations.

14. Device according to claim 8, 12 or 13, **characterized in**:

means for computing a fourth difference between an injected reference signal level and said signals nominal value of the signal level; and
means for computing an error signal formed by the difference between said low-pass filtered signals said third difference and said fourth difference; and
means for adjusting the power level of said first gateway stations (3) outbound signals by an amount based on said error signal within the permissible range of said power level.

**Patentansprüche**

1. Verfahren zur Aufwärtsstrecken-Leistungsregelung in einer Gateway-Bodenstation (3) in einem Satellitenkommunikationssystem mit einem geostationären Satelliten (2), mindestens zwei weiteren, geographisch auseinanderliegenden Boden-Gatewaystationen (4), die über den Satelliten (2) Signalträger (30) übermitteln, und einer Mehrzahl von Benutzerstationen (5), folgende Schritte umfassend:

   Übertragen eines ersten ausgehenden Signals (10) von einem ersten Gateway (3) zum Satelliten; Empfangen des vom Satelliten (2) zurückgesendeten (11) ersten ausgehenden Signals (10) im ersten Gateway (3) und Bestimmen des Leistungspegels des ersten ausgehenden Signals (10);
   **gekennzeichnet durch**:

   Empfangen von Signalen (31) von mindestens einer zweiten Gateway-Station (4) und mindestens einer dritten Gateway-Station (4) im selben Kommunikationssystem vom Satelliten (2) in der ersten Gateway-Station (3), und
   Durchführen der Aufwärtsstrecken-Leistungsregelung in der Gateway-Bodenstation (3) **durch**
   Bestimmen des Signal-Leistungspegels von empfangenen Signalen (31) vom zweiten Gateway (4) und vom dritten Gateway (4);
   Ersetzen des Signal-Leistungspegels mindestens eines der empfangenen Signale (31) vom zweiten Gateway (4) oder vom dritten Gateway (4) im ersten Gateway (3) **durch** einen vorgegebenen Leistungspegel-Nominalwert, wenn der Leistungspegel mindestens eines der empfangenen Signale (31) unter einem ersten vorgegebenen Schwellenwert liegt;
   Berechnen eines Mittelwerts des Signal-Leistungspegels der in der ersten Gateway-Station (3) von der zweiten Gateway-Station (4) und der dritten Gateway-Station (4) empfangenen Signale (31);
   Berechnen einer ersten Differenz zwischen dem ersten Signal-Leistungspegel (11) des ersten ausgehenden Signals (10) vom ersten Gateway (3) und einem Nominal-Signalleistungspegel eines vom Satelliten (2) zum ersten Gateway (3) zurückgesendeten ausgehenden Signals;
   Berechnen einer zweiten Differenz zwischen dem mittleren Signal-Leistungspegel des zweiten Signals (31) vom zweiten Gateway (4) und des dritten Signals (31) vom dritten Gateway (4) und einem nominalen mittleren Leistungspegel eines Signals vom zweiten Gateway (4) und eines Signals vom dritten Gateway (4);
   Berechnen eines ersten, aus der Differenz zwischen der ersten Differenz und der zweiten Differenz gebildeten Fehlersignals; und
   Anpassen des Leistungspegels der ausgehenden Signale der ersten Gateway-Station (3) um einen auf dem ersten Fehlersignal basierenden Betrag innerhalb des zulässigen Bereichs des Leistungspegels;
   oder
   Durchführen der Aufwärtsstrecken-Leistungsregelung in der Gateway-Bodenstation (3) **durch**
   Filtern von jeweiligen empfangenen Signalen (31) in jeweils individuellen Hochpassfiltern, in welchen eine tiefpassgefilterte Version eines Filter-Eingangssignals vom Filter-Eingangssignal selbst subtrahiert wird, um jeweilige momentane Pegeländerungssignale zu produzieren;
   Berechnen jeweiliger absoluter Pegeländerungssignale für die empfangenen Signale (31) **durch** Subtrahieren der jeweiligen momentanen Pegeländerungssignale von einem Mittel der Änderungen aller empfangenen Signale (31), um jeweilige Änderungsdifferenzen zu produzieren, und Berechnen jeweiliger Absolutwerte der jeweiligen produzierten Änderungsdifferenzen, um jeweilige Absolutwert-Pegeländerungssignale zu produzieren;
   Berechnen jeweiliger Varianzen für die empfangenen Signale (31) **durch** Erheben der jeweiligen Absolutwert-Pegeländerungssignale in eine Potenz im Bereich von 2 bis 5 und Filtern der jeweiligen Resultate in einem Tiefpassfilter;
   Berechnen jeweiliger Gewichtungen für die empfangenen Signale (31) **durch** Bilden des Kehrwerts der jeweiligen Varianzen, derart dass die empfangenen Signale (31) multipliziert mit den jeweiligen Gewichtungen die gleiche Varianz liefern;
   Berechnen jeweiliger normalisierter Gewichtungen für die empfangenen Signale (31), derart dass die Summe der normalisierten Gewichtungen gleich 1 ist;
   Berechnen einer Abwärtsstrecken-Schätzung **durch** Multiplizieren der jeweiligen momentanen Pegeländerungssignale für die empfangenen Signale (31) mit deren jeweiligen normalisierten Gewichtungen und nachfolgendes Summieren aller Produkte der Multiplikationen, um eine momentane Abwärtsstrecken-Schätzung zu bilden;
   Berechnen eines zweiten, als eine Differenz zwischen der momentanen Abwärtsstrecken-Schätzung und dem empfangenen zurückgesendeten (11) ersten ausgehenden Signal (10) und einem Hochfrequenz-Bezugssignal gebildeten Fehlersignals; und

Anpassen des Leistungspegels der ausgehenden Signale der ersten Gateway-Station (3) um einen auf dem zweiten Fehlersignal basierenden Betrag innerhalb des zulässigen Bereichs des Leistungspegels.

2. Verfahren nach Anspruch 1, **gekennzeichnet durch** folgenden Schritt:

Filtern aller Signalpegel der im ersten Gateway (3) von der zweiten Gateway-Station (4) und von der dritten Gateway-Station (4) empfangenen Signale (31), die über dem ersten vorgegebenen Schwellenwert liegen, mittels eines Hochpassfilters der Form:

$$TMP_t = K_1 * P + (1 - K_1) * TMP_{t-1}$$

$$P'_t = P - TM P_t$$

wobei TMP, eine temporäre Variable zu einem gegenwärtigen Zeitpunkt t ist, $K_1$ ein zwischen 0 und 1 festgesetzter Koeffizient ist, P die gegenwärtige gemessene Leistung des vom Gateway (3) zum Zeitpunkt t empfangenen Signals (11, 31) ist, $TMP_{t-1}$ der vorhergehende Abtastwert der temporären Variable TMP ist und $P'_t$ der gewünschte Hochpassfilterwert des Signal-Leistungspegels (31) ist.

3. Verfahren nach Anspruch 2, weiter **gekennzeichnet durch** folgenden Schritt:

Ersetzen des Ausgangs des Hochpassfilters **durch** null, wenn der Pegel der empfangenen Signale (31) unter dem ersten Schwellenwert liegt.

4. Verfahren nach Anspruch 1, **gekennzeichnet durch** folgenden Schritt:

Ersetzen eines gegenwärtigen Signal-Leistungspegels der von der zweiten Gateway-Station (4) und von der dritten Gateway-Station (4) empfangenen Signale (31) **durch** einen konstanten Nominalwert im Mittelungsverfahren, wenn der Signal-Leistungspegel der empfangenen Signale (31) von einem gegenwärtigen mittleren Signal-Leistungspegel der von der zweiten Gateway-Station (4) und von der dritten Gateway-Station (4) empfangenen Signale (31) um mehr als einen zweiten vorgegebenen Schwellenwert abweicht.

5. Verfahren nach Anspruch 1, **gekennzeichnet durch** folgenden Schritt:

Tiefpassfiltern des Mittelwerts des Signalpegels der vom zweiten Gateway (4) und vom dritten Gateway (4) empfangenen Signale (31) mittels eines Tiefpassfilters der Form:

$$D'_t = K_2 * D + (1 - K_2) * D'_{t-1}$$

wenn eine dritte Differenz zwischen dem gegenwärtigen Mittelwert und dem Mittelwert des vorangehenden Verfahrensschritts unter einem dritten Schwellenwert liegt; und wobei $D'_t$ der Filterausgang zum gegenwärtigen Abtastzeitpunkt t ist; $K_2$ ein auf einen ersten Wert von zwei unterschiedlichen Werten zwischen 0 und 1 gesetzt ist, je nachdem, ob die absolute Änderungsrate der dritten Differenz über oder unter dem vorgegebenen dritten Schwellenwert liegt; D die aktuelle dritte Differenz und $D'_t$. der Mittelwert des vorhergehenden Verfahrensschritts ist.

6. Verfahren nach Anspruch 5, weiter **gekennzeichnet durch** folgenden Schritt:

Ersetzen des Parameters K2 **durch** einen zweiten Wert zwischen 0 und 1, wenn der Mittelwert den dritten Schwellenwert überschreitet, um Szintillationen aufzuspüren.

7. Verfahren nach Anspruch 1, 5 oder 6, **gekennzeichnet durch** folgende Schritte:

Berechnen einer vierten Differenz zwischen einem eingekoppelten Bezugs-Signalpegel und dem Signal-Nominalwert des Signalpegels; und

Berechnen eines aus der Differenz zwischen den tiefpassgefilterten Signalen, der dritten Differenz und der vierten Differenz gebildeten Fehlersignals; und

Anpassen des Leistungspegels der ausgehenden Signale der ersten Gateway-Station (3) um einen auf dem Fehlersignal basierenden Betrag innerhalb des zulässigen Bereichs des Leistungspegels.

8. Vorrichtung zur Aufwärtsstrecken-Leistungsregelung in einer Gateway-Bodenstation (3) in einem Satellitenkommunikationssystem mit einem geostationären Satelliten (2), mindestens zwei weiteren, geographisch auseinanderliegenden Boden-Gatewaystationen (4), die über den Satelliten (2) Signalträger (30) übertragen, und einer Mehrzahl von Benutzerstationen (5), umfassend:

Mittel zum Übertragen eines ersten ausgehenden Signals (10) von einem ersten Gateway (3) zum Satelliten;
Mittel zum Empfangen des vom Satelliten (2) zurückgesendeten ersten ausgehenden Signals (11) im ersten Gateway (3) zum Bestimmen des Leistungspegels des ersten ausgehenden Signals (10);
**gekennzeichnet durch**:

eine erste Anordnung, die zur Durchführung der Aufwärtsstrecken-Leistungsregelung in der Gateway-Bodenstation (3) ausgebildet ist, wobei diese erste Anordnung umfasst:

Mittel zum Empfangen von Signalen (31) von mindestens einer zweiten Gateway-Station (4) und mindestens einer dritten Gateway-Station (4) im selben Kommunikationssystem vom Satelliten (2) in der ersten Gateway-Station (3), und zum Bestimmen des Signal-Leistungspegels von empfangenen Signalen (31) vom zweiten Gateway (4) und vom dritten Gateway (4);
Mittel zum Ersetzen des Signal-Leistungspegels mindestens eines der empfangenen Signale (31) vom zweiten Gateway (4) oder vom dritten Gateway (4) im ersten Gateway (3) **durch** einen vorgegebenen Leistungspegel-Nominalwert, wenn der Leistungspegel mindestens eines der empfangenen Signale (31) unter einem ersten vorgegebenen Schwellenwert liegt;
Mittel zum Berechnen eines Mittelwerts des Signal-Leistungspegels der in der ersten Gateway-Station (3) von der zweiten Gateway-Station (4) und der dritten Gateway-Station (4) empfangenen Signale (31);
Mittel zum Berechnen einer ersten Differenz zwischen dem ersten Signal-Leistungspegel des ersten ausgehenden Signals (10) vom ersten Gateway (3) und einem Nominal-Signalleistungspegel eines vom Satelliten (2) zum ersten Gateway (3) zurückgesendeten (11) ausgehenden Signals (10);
Mittel zum Berechnen einer zweiten Differenz zwischen dem mittleren Signal-Leistungspegel der empfangenen Signale (31) von der zweiten Gateway-Station (4) und der dritten Gateway-Station (4) und einem nominalen mittleren Leistungspegel eines Signals vom zweiten Gateway (4) und eines Signals vom dritten Gateway (4);
Mittel zum Berechnen eines ersten, aus der Differenz zwischen der ersten Differenz und der zweiten Differenz gebildeten Fehlersignals; und
Mittel zum Anpassen des Leistungspegels der ausgehenden Signale der ersten Gateway-Station (3) um einen auf dem ersten Fehlersignal basierenden Betrag innerhalb des zulässigen Bereichs des Leistungspegels;
oder
eine zweite Anordnung, die zur Durchführung der Aufwärtsstrecken-Leistungsregelung in der Gateway-Bodenstation (3) ausgebildet ist, wobei diese zweite Anordnung umfasst:

Mittel zum Filtern von jeweiligen empfangenen Signalen (31) in jeweils individuellen Hochpassfiltern, in welchen eine tiefpassgefilterte Version eines Filter-Eingangssignals vom Filter-Eingangssignal selbst subtrahiert wird, um jeweilige momentane Pegeländerungssignale zu produzieren;
Mittel zum Berechnen jeweiliger Pegeländerungssignale für die empfangenen Signale (31) **durch** Subtrahieren der jeweiligen momentanen Pegeländerungssignale von einem Mittel der Änderungen aller empfangenen Signale (31), um jeweilige Änderungsdifferenzen zu produzieren, und zum Berechnen jeweiliger Absolutwerte der jeweiligen produzierten Änderungsdifferenzen, um jeweilige Absolutwert-Pegeländerungssignale zu produzieren;
Mittel zum Berechnen jeweiliger Varianzen für die empfangenen Signale (31) **durch** Erheben der jeweiligen Absolutwert-Pegeländerungssignale in eine Potenz im Bereich von 2 bis 5 und Filtern der jeweiligen Resultate in einem Tiefpassfilter;
Mittel zum Berechnen jeweiliger Gewichtungen für die empfangenen Signale (31) **durch** Bilden der Kehrwerte der jeweiligen Varianzen, derart dass jedes der empfangenen Signale (31) multipliziert mit den jeweiligen Gewichtungen die gleiche Varianz liefert;

Mittel zum Berechnen jeweiliger normalisierter Gewichtungen für die empfangenen Signale (31), derart dass die Summe der normalisierten Gewichtungen gleich 1 ist;

Mittel zum Berechnen einer Abwärtsstrecken-Schätzung durch Multiplizieren der jeweiligen momentanen Pegeländerungssignale für die empfangenen Signale (31) mit deren jeweiligen normalisierten Gewichtungen und nachfolgendes Summieren aller Produkte der Multiplikationen, um eine momentane Abwärtsstrecken-Schätzung zu bilden;

Mittel zum Berechnen eines zweiten, als eine Differenz zwischen der momentanen Abwärtsstrecken-Schätzung und dem empfangenen zurückgesendeten (11) ersten ausgehenden Signal (10) und einem Hochfrequenz-Bezugssignal gebildeten Fehlersignals; und

Mittel zum Anpassen des Leistungspegels der ausgehenden Signale der ersten Gateway-Station (3) um einen auf dem zweiten Fehlersignal basierenden Betrag innerhalb des zulässigen Bereichs des Leistungspegels.

9.  Vorrichtung nach Anspruch 8, **gekennzeichnet durch**:

Mittel zum Filtern aller Empfangssignalpegel der im ersten Gateway (3) von der zweiten Gateway-Station (4) und von der dritten Gateway-Station (4) empfangenen Signale (31), die über dem ersten vorgegebenen Schwellenwert liegen, mittels eines Hochpassfilters der Form:

$$TMP_t = K_1 * P + (1 - K_1) * TMP_{t-1}$$

$$P'_t = P - TM\ P_t$$

wobei TMP, eine temporäre Variable zu einem gegenwärtigen Zeitpunkt t ist, $K_1$ ein zwischen 0 und 1 festgesetzter Koeffizient ist, P die gegenwärtige gemessene Leistung des vom Gateway (3) zum Zeitpunkt t empfangenen Signals (11, 31) ist, $TMP_{t-1}$ der vorhergehende Abtastwert der temporären Variable TMP ist und $P'_t$ der gewünschte Hochpassfilterwert des Signal-Leistungspegels (31) ist.

10.  Vorrichtung nach Anspruch 9, weiter **gekennzeichnet durch**:

Mittel zum Ersetzen des Ausgangs des Hochpassfilters durch null, wenn der Pegel der empfangenen Signale (31) unter dem ersten Schwellenwert liegt.

11.  Vorrichtung nach Anspruch 8, **gekennzeichnet durch**:

Mittel zum Ersetzen eines gegenwärtigen Signal-Leistungspegels der von der zweiten Gateway-Station (4) und von der dritten Gateway-Station (4) empfangenen Signale (31) durch einen konstanten Nominalwert im Mittelungsverfahren, wenn der Signal-Leistungspegel der empfangenen Signale (31) von einem gegenwärtigen mittleren Signal-Leistungspegel der von der zweiten Gateway-Station (4) und von der dritten Gateway-Station (4) empfangenen Signale (31) um mehr als einen zweiten vorgegebenen Schwellenwert abweicht.

12.  Vorrichtung nach Anspruch 8, **gekennzeichnet durch**:

Mittel zum Tiefpassfiltern des Mittelwerts des Signalpegels des zweiten Signals (31) vom zweiten Gateway (4) und des Signalpegels des dritten Signals (31) vom dritten Gateway (4) mittels eines Tiefpassfilters der Form:

$$D'_t = K_2 * D + (1 - K_2) * D'_{t-1}$$

wenn eine dritte Differenz zwischen dem gegenwärtigen Mittelwert und dem Mittelwert des vorangehenden Verfahrensschritts unter einem dritten Schwellenwert liegt; und wobei $D'_t$ der Filterausgang zum gegenwärtigen Abtastzeitpunkt t ist; $K_2$ ein auf einen ersten Wert von zwei unterschiedlichen Werten zwischen 0 und 1 gesetzt ist, je nachdem, ob die absolute Änderungsrate der dritten Differenz über oder unter dem vorgegebenen dritten Schwellenwert liegt; D die aktuelle dritte Differenz und D'$_t$. der Mittelwert des vorhergehenden Verfahrensschritts ist.

**13.** Vorrichtung nach Anspruch 11, weiter **gekennzeichnet durch**:

Mittel zum Ersetzen des Parameters K2 **durch** einen zweiten Wert zwischen 0 und 1, wenn der Mittelwert den dritten Schwellenwert überschreitet, um Szintillationen aufzuspüren.

**14.** Vorrichtung nach Anspruch 8, 12 oder 13, **gekennzeichnet durch**:

Mittel zum Berechnen einer vierten Differenz zwischen einem eingekoppelten Bezugs-Signalpegel und dem Signal-Nominalwert des Signalpegels; und
Mittel zum Berechnen eines aus der Differenz zwischen den tiefpassgefilterten Signalen, der dritten Differenz und der vierten Differenz gebildeten Fehlersignals; und
Mittel zum Anpassen des Leistungspegels der ausgehenden Signale der ersten Gateway-Station (3) um einen auf dem Fehlersignal basierenden Betrag innerhalb des zulässigen Bereichs des Leistungspegels.

**Revendications**

**1.** Procédé de réglage de puissance en liaison montante dans une station terrienne passerelle (3) dans un système de télécommunication par satellite comprenant un satellite géostationnaire (2), au moins deux autres stations passerelle terriennes (4) géographiquement dispersées communiquant des porteurs de signaux (30) par l'intermédiaire dudit satellite (2), et une pluralité de stations d'utilisateurs (5), comprenant les étapes consistant à:

transmettre un premier signal sortant (10) d'une première passerelle (3) audit satellite; recevoir ledit premier signal sortant (10) retransmis (11) par ledit satellite (2) dans ladite première passerelle (3) en déterminant le niveau de puissance dudit premier signal sortant (10);
**caractérisé par le fait**:

de recevoir des signaux (31) d'au moins une deuxième station passerelle (4) et au moins une troisième station passerelle (4) dans le même système de télécommunication dudit satellite (2) dans ladite première station passerelle (3), et
d'effectuer le réglage de puissance en liaison montante dans ladite station terrestre passerelle (3) en déterminant le niveau de puissance de signaux reçus (31) de ladite deuxième passerelle (4) et de ladite troisième passerelle (4);
remplaçant le niveau de puissance d'au moins un desdits signaux reçus (31) de ladite deuxième passerelle (4) ou de ladite troisième passerelle (4) dans ladite première passerelle (3) par un niveau de puissance prédéfini d'une valeur nominale si le niveau de puissance d'au moins un desdits signaux reçus (31) est inférieur à une première valeur seuil prédéfinie;
calculant une valeur moyenne du niveau de puissance des signaux reçus (31) de ladite deuxième station passerelle (4) et de ladite troisième station passerelle (4) dans ladite première station passerelle (3);
calculant une première différence entre ledit premier niveau de puissance (11) dudit premier signal sortant (10) en provenance de ladite première passerelle (3) et un niveau nominal de puissance d'un signal sortant retransmis par ledit satellite (2) à ladite première passerelle (3);
calculant une deuxième différence entre ledit niveau de puissance moyen dudit deuxième signal (31) en provenance de ladite deuxième passerelle (4) et dudit troisième signal (31) en provenance de ladite troisième passerelle (4) et un niveau de puissance moyen nominal d'un signal en provenance de ladite deuxième passerelle (4) et d'un signal en provenance de ladite troisième passerelle (4);
calculant un premier signal d'erreur formé par la différence entre ladite première différence et ladite deuxième différence; et en
ajustant le niveau de puissance des signaux sortants de ladite première station passerelle (3) à concurrence d'un montant basé sur ledit premier signal d'erreur dans la plage admissible dudit niveau de puissance; ou
d'effectuer le réglage de puissance en liaison montante dans ladite station terrestre passerelle (3) en filtrant des signaux reçus (31) respectifs dans des filtres passe-haut individuels respectifs réalisés en soustrayant une version d'un signal d'entrée du filtre ayant subi un filtrage passe-bas du signal d'entrée du filtre lui-même afin de produire des signaux respectifs de variation de niveau instantanée;

calculant des signaux respectifs de variation de niveau absolue pour lesdits signaux reçus (31) en soustrayant les signaux respectifs de variation de niveau instantanée d'une moyenne des variations de tous les signaux reçus (31) afin de produire des différences respectives de variation, et en calculant des valeurs absolues respectives des différences respectives de variation produites afin de produire des signaux respectifs de variation de niveau de valeur absolue;

calculant des variances respectives pour les signaux reçus (31) en élevant les signaux respectifs de variation de niveau de valeur absolue à une puissance dans la plage de 2 à 5 et en filtrant les résultats respectifs dans un filtre passe-bas;

calculant des coefficients de pondération respectifs pour les signaux reçus (31) en prenant l'inverse des variances respectives de telle manière que les signaux reçus (31), multipliés par les coefficients de pondération respectifs, contribuent la même variance;

calculant des coefficients de pondération normalisés respectifs pour les signaux reçus (31) de telle manière que la somme desdits coefficients de pondération normalisés est égale à 1;

calculant une estimation de la liaison descendante en multipliant d'abord lesdits signaux respectifs de variation de niveau instantanée pour les signaux reçus (31) par leurs coefficients de pondération normalisés respectifs et en sommant ensuite tous les produits des multiplications afin de former une estimation instantanée de la liaison descendante;

calculant un deuxième signal d'erreur formé en tant que la différence entre ladite estimation instantanée de la liaison descendante et le premier signal sortant (10) retransmis (11) reçu et un signal RF de référence; et

ajustant le niveau de puissance des signaux sortants de ladite première station passerelle (3) à concurrence d'un montant basé sur ledit deuxième signal d'erreur dans la plage admissible dudit niveau de puissance.

2. Procédé selon la revendication 1, **caractérisé par** l'étape consistant à:

filtrer tous lesdits niveaux de signal des signaux reçus (31) de ladite deuxième station passerelle (4) et de ladite troisième station passerelle (4) dans ladite première passerelle (3) qui sont supérieurs à ladite première valeur seuil prédéfinie au moyen d'un filtre passe-haut de la forme:

$$TMP_t = K_1 * P + (1 - K_1) * TMP_{t-1}$$

$$P'_t = P - TM\ P_t$$

où TMP, est une variable temporaire à un moment actuel t, $K_1$ est un coefficient fixé entre 0 et 1, P est la puissance actuelle mesurée du signal (11, 31) que la passerelle (3) est en train de recevoir au moment t, $TMP_{t-1}$ est la valeur d'échantillonnage précédente de la variable temporaire TMP et $P'_t$ est la valeur souhaitée du filtre passe-haut dudit niveau de puissance du signal (31).

3. Procédé selon la revendication 2, **caractérisé en** plus par l'étape consistant à:

remplacer les sorties dudit filtre passe-haut par zéro si ledit niveau des signaux reçus (31) est inférieur à ladite première valeur seuil.

4. Procédé selon la revendication 1, **caractérisé par** l'étape consistant à:

remplacer un niveau de puissance actuel des signaux reçus (31) de ladite deuxième station passerelle (4) et de ladite troisième station passerelle (4) par une valeur nominale constante dans le processus de moyenne si le niveau de puissance des signaux reçus (31) s'écarte d'un niveau de puissance de signal moyen actuel desdits signaux reçus (31) de ladite deuxième station passerelle (4) et de ladite troisième station passerelle (4) plus que d'une deuxième valeur seuil prédéfinie.

5. Procédé selon la revendication 1, **caractérisé par** l'étape consistant à:

faire subir un filtrage passe-bas à la valeur moyenne du niveau de signal des signaux reçus (31) de ladite deuxième passerelle (4) et de ladite troisième passerelle (4) au moyen d'un filtre passe-bas de la forme:

$$D'_t = K_2 * D + (1 - K_2) * D'_{t-1}$$

si une troisième différence entre ladite valeur moyenne actuelle et ladite valeur moyenne de l'étape de traitement précédente est inférieure à une troisième valeur seuil; et où $D'_t$ est la sortie du filtre au moment de l'échantillon actuel t; $K_2$ est un paramètre fixé à une première valeur de deux valeurs différentes entre 0 et 1 selon que le taux de variation absolu de la troisième différence est supérieur ou inférieur à ladite troisième valeur seuil prédéfinie; D est ladite troisième différence momentanée et $D'_t$. est la valeur moyenne de l'étape de traitement précédente.

6. Procédé selon la revendication 5, **caractérisé en** plus par l'étape consistant à:

remplacer ledit paramètre K2 par une deuxième valeur entre 0 et 1 si ladite valeur moyenne dépasse ladite troisième valeur seuil afin de permettre le dépistage de scintillations.

7. Procédé selon la revendication 1, 5 ou 6, **caractérisé par** les étapes consistant à:

calculer une quatrième différence entre un niveau de signal référence injecté et ladite valeur nominale du niveau de signal dudit signal; et

calculer un signal d'erreur formé par la différence entre lesdits signaux ayant subi le filtrage passe-bas, ladite troisième différence et ladite quatrième différence; et

ajuster le niveau de puissance des signaux sortants de ladite première station passerelle (3) à concurrence d'un montant basé sur ledit signal d'erreur dans la plage admissible dudit niveau de puissance.

8. Dispositif de réglage de puissance en liaison montante dans une station terrienne passerelle (3) dans un système de télécommunication par satellite comprenant un satellite géostationnaire (2), au moins deux autres stations passerelle terriennes (4) géographiquement dispersées communiquant des porteurs de signaux (30) par l'intermédiaire dudit satellite (2) et une pluralité de stations d'utilisateurs (5), comprenant:

des moyens pour transmettre un premier signal sortant (10) d'une première passerelle (3) audit satellite; des moyens pour recevoir ledit premier signal sortant (11) retransmis par ledit satellite (2) dans ladite première passerelle (3) en déterminant le niveau de puissance dudit premier signal sortant (10);
**caractérisé par**:

un premier agencement adapté à effectuer le réglage de puissance en liaison montante dans ladite station terrienne passerelle (3), ledit premier agencement comprenant:

des moyens pour recevoir des signaux (31) d'au moins une deuxième station passerelle (4) et d'au moins une troisième station passerelle (4) dans le même système de télécommunication dudit satellite (2) dans ladite première station passerelle (3), et pour déterminer le niveau de puissance de signaux reçus (31) de ladite deuxième passerelle (4) et de ladite troisième passerelle (4);

des moyens pour remplacer le niveau de puissance d'au moins un desdits signaux reçus (31) de ladite deuxième passerelle (4) ou de ladite troisième passerelle (4) dans ladite première passerelle (3) par un niveau de puissance prédéfini d'une valeur nominale si le niveau de puissance d'au moins un desdits signaux reçus (31) est inférieur à une première valeur seuil prédéfinie;

des moyens pour calculer une valeur moyenne du niveau de puissance des signaux reçus (31) de ladite deuxième station passerelle (4) et de ladite troisième station passerelle (4) dans ladite première station passerelle (3);

des moyens pour calculer une première différence entre ledit premier niveau de puissance dudit premier signal sortant (10) en provenance de ladite première passerelle (3) et un niveau nominal de puissance d'un signal sortant (10) retransmis (11) par ledit satellite (2) à ladite première passerelle (3);

des moyens pour calculer une deuxième différence entre ledit niveau de puissance moyen des signaux reçus (31) en provenance de ladite deuxième station passerelle (4) et de ladite troisième station passerelle (4) et un niveau de puissance moyen nominal d'un signal en provenance de ladite deuxième passerelle (4) et d'un signal en provenance de ladite troisième passerelle (4);

des moyens pour calculer un premier signal d'erreur formé par la différence entre ladite première différence et ladite deuxième différence; et

des moyens pour ajuster le niveau de puissance des signaux sortants de ladite première station passerelle (3) à concurrence d'un montant basé sur ledit premier signal d'erreur dans la plage admissible dudit niveau de puissance;

ou

un deuxième agencement adapté à effectuer le réglage de puissance en liaison montante dans ladite station terrienne passerelle (3), ledit deuxième agencement comprenant

des moyens pour filtrer des signaux reçus (31) respectifs dans des filtres passe-haut individuels respectifs réalisés en soustrayant une version d'un signal d'entrée du filtre ayant subi un filtrage passe-bas du signal d'entrée du filtre lui-même afin de produire des signaux respectifs de variation de niveau instantanée;

des moyens pour calculer des signaux respectifs de variation de niveau pour lesdits signaux reçus (31) en soustrayant les signaux respectifs de variation de niveau instantanée d'une moyenne des variations de tous les signaux reçus (31) afin de produire des différences respectives de variation, et pour calculer des valeurs absolues respectives des différences respectives de variation produites afin de produire des signaux respectifs de variation de niveau de valeur absolue;

des moyens pour calculer des variances respectives pour lesdits signaux reçus (31) en élevant les signaux respectifs de variation de niveau de valeur absolue à une puissance dans la plage de 2 à 5 et en filtrant les résultats respectifs dans un filtre passe-bas;

des moyens pour calculer des coefficients de pondération respectifs pour les signaux reçus (31) en prenant les inverses des variances respectives de telle manière que chacun des signaux reçus (31), multiplié par le coefficient de pondération respectif, contribue la même variance;

des moyens pour calculer des coefficients de pondération normalisés respectifs pour les signaux reçus (31) de telle manière que la somme desdits coefficients de pondération normalisés est égale à 1;

des moyens pour calculer une estimation de la liaison descendante en multipliant d'abord lesdits signaux respectifs de variation de niveau instantanée pour les signaux reçus (31) par leurs coefficients de pondération normalisés respectifs et en sommant ensuite tous les produits des multiplications afin de former une estimation instantanée de la liaison descendante;

des moyens pour calculer un deuxième signal d'erreur formé en tant que la différence entre ladite estimation instantanée de la liaison descendante et le premier signal sortant (10) retransmis (11) reçu et un signal RF de référence; et

des moyens pour ajuster le niveau de puissance des signaux sortants de ladite première station passerelle (3) à concurrence d'un montant basé sur ledit deuxième signal d'erreur dans la plage admissible dudit niveau de puissance.

**9.** Dispositif selon la revendication 8, **caractérisé par**:

des moyens pour filtrer tous lesdits niveaux de signal des signaux reçus (31) de ladite deuxième station passerelle (4) et de ladite troisième station passerelle (4) dans ladite première passerelle (3) qui sont supérieurs à ladite première valeur seuil prédéfinie au moyen d'un filtre passe-haut de la forme:

$$TMP_t = K_1 * P + (1 - K_1) * TMP_{t-1}$$

$$P'_t = P - TM\,P_t$$

où TMP, est une variable temporaire à un moment actuel t, $K_1$ est un coefficient fixé entre 0 et 1, P est la puissance actuelle mesurée du signal (11, 31) que la passerelle (3) est en train de recevoir au moment t, $TMP_{t-1}$ est la valeur d'échantillonnage précédente de la variable temporaire TMP et $P'_t$ est la valeur souhaitée du filtre passe-haut dudit niveau de puissance du signal (31).

**10.** Dispositif selon la revendication 9, **caractérisé en outre par**:

des moyens pour remplacer les sorties dudit filtre passe-haut par zéro si ledit niveau des signaux reçus (31) est inférieur à ladite première valeur seuil.

**11.** Dispositif selon la revendication 8, **caractérisé par**:

des moyens pour remplacer un niveau de puissance actuel des signaux reçus (31) de ladite deuxième station passerelle (4) et de ladite troisième station passerelle (4) par une valeur nominale constante dans le processus de moyenne si le niveau de puissance des signaux reçus (31) s'écarte d'un niveau de puissance de signal moyen actuel desdits signaux reçus (31) de ladite deuxième station passerelle (4) et de ladite troisième station passerelle (4) plus que d'une deuxième valeur seuil prédéfinie.

**12.** Dispositif selon la revendication 8, **caractérisé par**:

des moyens pour faire subir un filtrage passe-bas à la valeur moyenne du niveau de signal dudit deuxième signal (31) de ladite deuxième passerelle (4) et du niveau de signal dudit troisième signal (31) de ladite troisième passerelle (4) au moyen d'un filtre passe-bas de la forme:

$$D'_t = K_2 * D + (1 - K_2) * D'_{t-1}$$

si une troisième différence entre ladite valeur moyenne actuelle et ladite valeur moyenne de l'étape de traitement précédente est inférieure à une troisième valeur seuil; et où $D'_t$ est la sortie du filtre au moment de l'échantillon actuel t; $K_2$ est un paramètre fixé à une première valeur de deux valeurs différentes entre 0 et 1 selon que le taux de variation absolu de la troisième différence est supérieur ou inférieur à ladite troisième valeur seuil prédéfinie; D est ladite troisième différence actuelle et $D'_t$. est la valeur moyenne de l'étape de traitement précédente.

**13.** Dispositif selon la revendication 11, **caractérisé en outre par**:

des moyens pour remplacer ledit paramètre K2 par une deuxième valeur entre 0 et 1 si ladite valeur moyenne dépasse ladite troisième valeur seuil afin de permettre le dépistage de scintillations.

**14.** Dispositif selon la revendication 8, 12 ou 13, **caractérisé par**:

des moyens pour calculer une quatrième différence entre un niveau de signal référence injecté et ladite valeur nominale du niveau de signal dudit signal; et
des moyens pour calculer un signal d'erreur formé par la différence entre lesdits signaux ayant subi le filtrage passe-bas, ladite troisième différence et ladite quatrième différence; et
des moyens pour ajuster le niveau de puissance des signaux sortants de ladite première station passerelle (3) à concurrence d'un montant basé sur ledit signal d'erreur dans la plage admissible dudit niveau de puissance.

Fig 1

Fig 2A

Fig 2B

Fig 2C

10

11

31

100

600

500

Reference

Transmitter
Chain

Receiver
Chain

200

400

Power
Control

Signal
Detectors

300

Fig 3

Fig. 4

Fig. 5

11    310

31    320

53

52

54

Fig. 6

55

EP 1 393 470 B1

RF
Refe-
rence

Rx
Chain

Antenna

Transmitter

"Other" GW
Detecetors

Adaptive
Downlink
Estimator

Special
Events
Detection

RF Reference
Detector

Pilot
Detector

Difference
Circuit

P-R-D

D

R

P

Fig. 7

Fig. 8

34

**201** Hi-pass Filters Signal Levels

**202** Compute Instantaneous variance

**203** Low-pass Filters Variance

**204** Compute Relative Weights

**208** Detect Carrier presence

**209** Detect Abnormal Carriers

**210** Suppress Abnormal Carriers

**205** Normalise Weights

**206** Compute Downlink Estimate

**207** Low-pass Filter Eestimate

Downlink Esrimate

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4567485 A
- US 4752967 A
- EP 1098456 A2
- WO 200069096 A